# EUROPÄISCHE PATENTSCHRIFT

(11) **EP 0 936 106 B1**
(45) Veröffentlichungstag und Bekanntmachung des Hinweises auf die Patenterteilung: **12.04.2006**
(21) Anmeldenummer: 99100677.6
(22) Anmeldetag: 15.01.1999
(51) Int. Cl.: B60N 2/44, A47C 7/74

(54) **Fahrzeugsitz**
Vehicle seat
Siège de véhicule

(30) Priorität: 10.02.1998 DE 19805173
(43) Veröffentlichungstag der Anmeldung: 18.08.1999
(73) Patentinhaber: DaimlerChrysler AG, 70567 Stuttgart (DE)
(72) Erfinder: Faust, Eberhard, 70597 Stuttgart (DE); Pfahler, Karl Dr., 70180 Stuttgart (DE)

(56) Entgegenhaltungen:
- EP-A- 0 424 160
- WO-A-96/05475
- DE-C- 19 628 698

## Beschreibung

Die Erfindung betrifft einen Fahrzeugsitz gemäß dem Oberbegriff des Patentanspruchs 1. Ein derartiger Fahrzeugsitz ist aus EP-A-0 424 160 bekannt.

Solche belüfteten Fahrzeugsitze dienen der Verbesserung des Sitzklimakomforts sowohl beim Einsteigen in ein geparktes, durch längere Sonneneinstrahlung überhitztes Fahrzeug, als auch über längere Fahrzeiten hinweg.

Bei einem Fahrzeugsitz dieser Art (DE 196 28 698 C1) überzieht die aus einem grobmaschigen Abstandsgewirk bestehende luftdurchflutbare Polsterschicht, die sog. Ventilationsschicht, ganzflächig eine Polsterauflage aus Gummihaar oder Schaumstoff, die auf einem Polsterträger, z.B. einem Federkern, aufliegt, und ist auf ihrer von der Polsterauflage abgekehrten Ober- oder Vorderseite von einer luftdurchlässigen Druckverteilungsschicht aus einem Abstandsgewirk, Vlies oder offenporigen Schaum überzogen. Die Druckverteilungsschicht ist von einem Polsterbezug überspannt, und zwischen Polsterbezug und Druckverteilungsschicht ist eine Bezugsfüllung eingearbeitet. Zur Belüftung der Ventilationsschicht ist eine Vielzahl von elektrisch angetriebenen Miniaturlüftern oder Miniaturventilatoren vorgesehen, die in in die Polsterauflage eingearbeiteten Luftkanälen eingesetzt sind. Diese Luftkanäle sind über die Polsterfläche verteilt angeordnet. In einem begrenzten Bereich oberhalb der Luftkanalmündungen ist jeweils auf der von der Luftkanalmündung abgekehrten Oberseite der Ventilationsschicht eine luftundurchlässige Zwischenlage, z.B. eine Folie, angeordnet, so daß hier die über den Luftkanal in die Ventilationsschicht eingeblasene Luft nicht sofort durch die Druckverteilungsschicht und dem Polsterbezug austritt, sondern umgelenkt wird und die Ventilationsschicht durchströmt. Die Miniaturlüfter saugen aus dem unterhalb des Sitzteils befindlichen Bereich des Fahrgastraums Luft an und blasen diese in die Ventilationsschicht. In der Ventilationsschicht kann sich die Luft in allen Richtungen ausbreiten und strömt bei unbesetztem Sitz durch die Druckverteilungsschicht und den Polsterbezug hindurch in den Luftraum oberhalb der Sitzoberfläche, wodurch eine rasche Abkühlung der z.B. durch Sonneneinstrahlung aufgeheizten Sitzfläche bewirkt wird. Bei besetztem Sitz strömt die Luft in der Ventilationsschicht entlang und tritt an den offenen Enden der Ventilationsschicht wieder aus. Sie erzeugt dabei einen Temperatur- und Luftfeuchtigkeitsgradienten und führt die vom Sitzenden angefeuchtete Luft ab.

Der Erfindung liegt die Aufgabe zugrunde, bei einem Fahrzeugsitz der eingangs genannten Art den Belüftungswirkungsgrad der Sitzbelüftung zu optimieren.

Die Aufgabe ist bei einem Fahrzeugsitz der im Oberbegriff des Patentanspruchs 1 definierten Gattung erfindungsgemäß durch die Merkmale im Kennzeichenteil des Patentanspruchs 1 gelöst.

Der erfindungsgemäße Fahrzeugsitz hat den Vorteil, daß durch das Vorsehen der Abluftkanäle im Polster bei besetztem Sitz die von einer Mehrzahl von Ventilatoren geförderte Ventilationsluft nach Durchströmen der Ventilationsschicht ungedrosselt aus dem Polster austreten kann und dadurch einen relativ großen Luftfeuchtigkeits- und Temperaturgradienten gegenüber dem Mikroklima auf der Polsteroberfläche erzeugt, so daß wirkungsvoll Transpirationsfeuchtigkeit von der Polsterfläche abgeführt wird. Zugleich wird der Durchströmungswiderstand der Ventilationsschicht reduziert, so daß die Luft in der Ventilationsschicht nicht an die Polsteroberfläche gedrückt und so ein direktes Anblasen des Sitzbenutzers vermieden wird. Damit hat der Sitzbenutzer nicht das Gefühl von Zuglufterscheinungen. Durch den geringen Durchströmungswiderstand der Ventilationsschicht wird auch der Wirkungsgrad der ventilatoren und insgesamt der Belüftungswirkungsgrad verbessert.

Vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Gemäß einer bevorzugten Ausführungsform der Erfindung sind die Mündungen der Zu- und Ablüftkanäle an der Unter- oder Rückseite des Polsters so angeordnet, daß Zu- und Abluftstrom voneinander getrennt sind. Dadurch wird vermieden, daß die Abluft in einer Art Kurzschlußströmung wieder als Zuluft in die Zuluftkanäle eindringt und dadurch die Ventilationsluft durch mehrmaliges Durchlaufen der Ventilationsschicht zunehmend mit Feuchtigkeit angereichert wird.

Befinden sich unterhalb des Polsters im Sitzteil oder hinter dem Polster im Rückenteil Hohlräume, so werden gemäß vorteilhafter Ausführungsformen der Erfindung diese Hohlräume für die Luftansaugung durch die in den Zuluftkanälen angeordneten Miniaturventilatoren genutzt und erhalten hierzu eine Lufteintrittsöffnung, über welche Luft aus dem Raumbereich unterhalb des Fahrzeugsitzes eintreten kann. Die im Polster eingearbeiteten Abluftkanäle setzen sich in Luftschächten fort, die den Hohlraum vollständig durchdringen und außerhalb des Hohlraums frei münden.

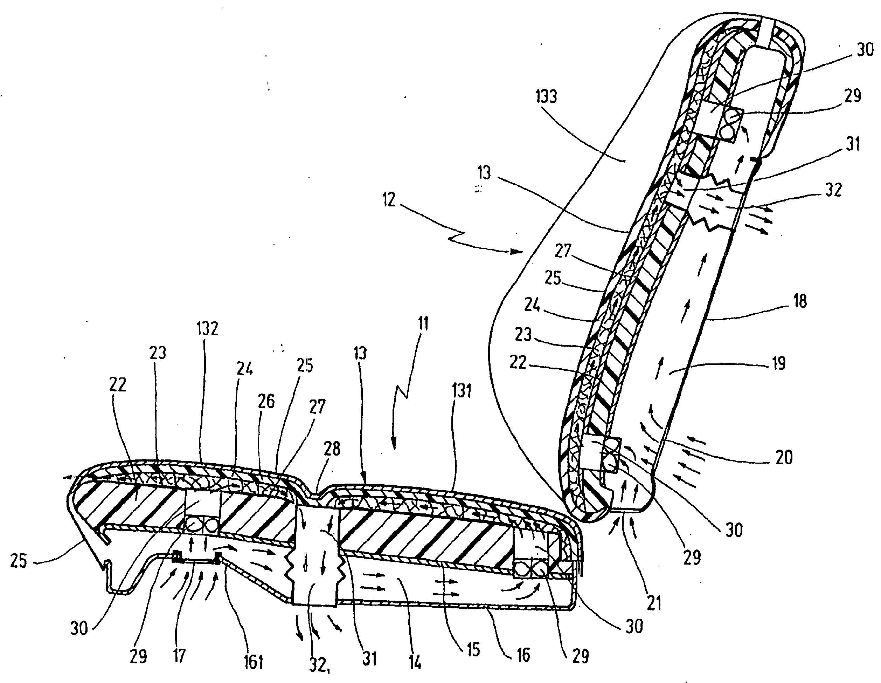

Die Erfindung ist anhand eines in der Zeichnung dargestellten Ausführungsbeispiels im folgenden näher beschrieben. Dabei zeigt die Zeichnung in schematischer Darstellung einen Längsschnitt eines Fahrzeugsitzes.

Der Fahrzeugsitz weist in bekannter Weise ein am Fahrzeugboden verstellbar gehaltenes Sitzteil 11 und eine Rückenlehne 12 auf, die zur Neigungseinstellung über eine Schwenkrasterung mit dem Sitzteil 11 verbunden ist. Sitzteil 11 und Rückenlehne 12 besitzen jeweils ein Polster 13, das auf einem Polsterträger 15 aufgenommen ist. Der Polsterträger 15 im Sitzteil 11 ist als ein Federkern aus Federdraht ausgebildet, der in einer Sitzschale 16 aufgespannt ist. Die Sitzschale 16 schließt einen an der Unterseite des Polsters 13 sich erstreckenden Hohlraum 14 ab. Im vorderen Bereich des Sitzteils 11 ist in der Sitzschale 16 ein sog. Antisubmarining-Keil 161 ausgebildet, der bei extrem starken Bremsvorgängen oder bei Frontalcrash zur Abstützung des vorderen Teils des Polsterträgers 15 dient und dadurch das Durchtauchen des Sitzbenutzers unter dem Sitzgurt hindurch vermeidet. Im Bereich des Antisubmarining-Keils 161 weist die Sitzschale 16 eine Lufteintrittsöffnung 17 auf, durch die Luft von der Unterseite des Sitzteils 11 in den Hohlraum 14 eintreten kann.

Das Polster 13 in der Rückenlehne 12 ist ebenfalls von einem Polsterträger 15 aufgenommen, der ebenfalls als Federkern ausgebildet sein kann, der in einem der Übersichtlichkeit halber hier nicht dargestellten Lehnenrahmen aufgespannt ist. Das Polster 13 in der Rückenlehne 12 ist über die Oberkante der Rückenlehne 12 herumgeführt und deckt im oberen Bereich die Rückseite der Rückenlehne 12 ab. Der übrige Teil der Rückseite der Rückenlehne 12 ist von einer luftundurchlässigen Rückwand, der sog. Lehnenverkleidung 18, abgedeckt. Dabei verbleibt zwischen dem Polster 13 und der Lehnenverkleidung 18 wiederum ein Hohlraum 19, der sich über die gesamte Fläche des Polsters 13 erstreckt. Die Lehnenverkleidung 18 weist im unteren Bereich der Rückenlehne sowohl auf der Rückseite der Rückenlehne 12 als auch auf der Unterseite der Rückenlehne 12 jeweils eine Lufteintrittsöffnung 20 und 21 auf, durch welche Luft aus dem Raum unterhalb des Fahrzeugsitzes in den Hohlraum 19 eintreten kann.

Die Polsterstruktur des Polsters 13 im Sitzteil 11 und in der Rückenlehne 12 ist weitgehend identisch und umfaßt,eine auf dem Polsterträger 15 aufliegende Polsterauflage 22 aus Gummihaar oder Schaumstoff, eine die Polsterauflage 22 ganzflächig überziehende, luftdurchflutbare Ventilationsschicht 23 aus einem grobmaschigen Abstandsgewirk, eine auf der Ventilationsschicht 23 aufliegende luftdurchlässige Druckverteilungsschicht 24, die aus einem Abstandsgewirk, einem Vlies oder einem offenporigen Schaum besteht, und eine die dem Sitzenden zugekehrte Oberfläche überspannenden luftdurchlässigen Polsterbezug 25 aus Textilstoff oder perforiertem Leder oder Kunstleder. Zwischen Polsterbezug 25 und Druckverteilungsschicht 24 ist eine luftdurchlässige Bezugsfüllung 26 eingearbeitet und zwischen Ventilationsschicht 23 und Polsterauflage 22 eine luftdurchlässige dünne Schaumstoff- oder Vliesschicht 27 eingelegt. Die Bezugsfüllung 26, die ggf. noch Heizleiter einer elektrischen Sitzheizung aufnimmt, besteht aus einer Schicht offenporigem Schnittschaums und/oder aus einem Wollvlies. Bei dem Polster 13 in der Rückenlehne 12 ist auf die Bezugsfüllung 26 verzichtet. Das Polster 13 im Sitzteil 11 ist durch eine quer zur Sitztiefe verlaufende Abheftung 28 in eine der Rückenlehne 12 zugekehrte hintere Polsterzone 131 und in eine von der Rückenlehne 12 abgekehrte vordere Polsterzone 132 unterteilt. Im Polster 13 in der Rückenlehne 12 sind zwei seitliche Randwülste 133 ausgebildet.

Zur Lufteinblasung in die luftdurchlässige Ventilationsschicht 23 sind in der Polsterauflage 22 eine Mehrzahl von Zuluftkanälen 30 eingearbeitet, die die Polsterauflage 22 und die luftundurchlässige dünne Schaumstoff- oder Vliesschicht 27 vollständig durchdringen und einerseits an der Ventilationsschicht 23 und andererseits im Hohlraum 14 des Sitzteils 11 bzw. im Hohlraum 19 der Rückenlehne 12 münden. Im Ausführungsbeispiel ist im Polster 13 des Sitzteils 11 mindestens ein Zuluftkanal 29 in der hinteren Polsterzone 131 nahe der Rückenlehne 12 und ein Zuluftkanal 30 etwa mittig in der vorderen Polsterzone 132 angeordnet, während im Polster 13 der Rückenlehne 12 jeweils ein Zuluftkanal 30 nahe dem unteren und oberen Ende der Rückenlehne 12 vorgesehen ist. Sowohl im Polster 13 des Sitzteils 11 als auch im Polster 13 der Rückenlehne 12 können mehrere Zuluftkanäle 30 im Querabstand voneinander nebeneinander, vorzugsweise gleichmäßig über die Sitzbreite verteilt, angeordnet werden. In jedem Zuluftkanal 30 ist ein elektrisch angetriebener Miniaturlüfter oder Miniaturventilator 29 angeordnet, der Luft aus dem Hohlraum 14 bzw. 19 ansaugt und über den Zuluftkanal 30 in die Ventilationsschicht 23 drückt. In der Polsterauflage 22 sind weiterhin Abluftkanäle 31 eingearbeitet, die ebenfalls die Schaumstoff- oder Vliesschicht 27 sowie die gesamte Polsterauflage 22 von der Ventilationsschicht 23 bis hin zum Polsterträger 15 durchsetzen und sich jeweils in einem Luftschacht 32 fortsetzen, der den Hohlraum 14 bzw. 19 vollständig durchdringt und außerhalb des Hohlraums 14 bzw. 19 an der Unterseite des Sitzteils 11 bzw. auf der Rückseite der Rückenlehne 12 mündet. Die Luftschächte 32 sind in Axialrichtung elastisch ausgebildet und hier als Faltenbälge ausgeführt. In der Zeichnung sind in den beiden Polstern 13 für Sitzteil 11 und Rückenlehne 12 jeweils ein Abluftkanal 31 mit Luftschacht 32 dargestellt. Mehrere solche Abluftkanäle 31 mit Luftschächten 32 sind jedoch im Querabstand voneinander über die Sitzbreite verteilt angeordnet. Die Abluftkanäle 31 im Polster 13 des Sitzteils 11 sind im Bereich der Abheftung 28 und die Mündungen der Luftschächte 32 in einem Abschnitt der Sitzschale 16 angeordnet, der dem Fahrzeugboden näherliegt als der die Lufteintrittsöffnung 17 aufweisende Bereich des Antisubmarining-Keils 161. Die Abluftkanäle 31 im Polster 13 der Rückenlehne 12 sind oberhalb der Polstermitte angeordnet.

Bei Einschalten der Miniaturventilatoren 29 wird im Sitzteil 11 Luft über die Lufteintrittsöffnung 17 und in der Rückenlehne 12 über die Lufteintrittsöffnungen 20,21 aus dem Raum unterhalb des Sitzteils 11 bzw. der Rückenlehne 12 angesaugt, die in den Hohlraum 14 bzw. 19 einströmt und von den Miniaturventilatoren 29 über die Zuluftkanäle 30 in die Ventilationsschicht 23 des Polsters 13 gedrückt wird. Bei besetztem Sitz durchströmt die Ventilationsluft die Ventilationsschicht 23 und tritt ungedrosselt über die Abluftkanäle 31 und die Luftschächte 32 in die Fahrgastzelle aus. Da die Lufteintrittsöffnungen 17 bzw. 20 und 21 zu den Hohlräumen 14 und 19 an wesentlich anderer Stelle in der Sitzschale 16 bzw. in der Lehnenverkleidung 18 angeordnet sind als die Mündungen der Luftschächte 32 wird verhindert, daß die über die Abluftkanäle 31 und Luftschächte 32 ausströmende Luft wieder über die Lufteintrittsöffnungen 17 bzw. 20,21 angesaugt und der Ventilationsschicht 23 im Polster 13 erneut zugeführt wird. Bei unbesetztem Sitz tritt die durch die Ventilationsschicht 23 gedrückte Luft auch durch die luftdurchlässige Druckverteilungsschicht 24 und den luftdurchlässigen Polsterbezug 25 an der Oberfläche des Polsters 13 aus, so daß die durch längere Sonneneinstrahlung beim Parken des Fahrzeugs überhitzten Polsteroberflächen gut durchlüftet und relativ schnell abgekühlt werden.

## Patentansprüche

1. Fahrzeugsitz mit einem in einem Sitzteil (11) und/oder einer Rückenlehne (12) integrierten Polster (13), das eine luftdurchflutbare, insbesondere aus einem grobmaschigen Abstandsgewirk bestehende, Ventilationsschicht (23) und einen die dem Sitzenden zugekehrte Polsteroberfläche überspannenden Polsterbezug (25) aufweist, wobei in dem Polster (13) Abluftkanäle (31) eingearbeitet sind, die sich von der Ventilationsschicht (23) bis zur Unter- oder Rückseite des Polsters (13) erstrecken und dort frei münden,
**gekennzeichnet durch** eine Mehrzahl von elektrisch angetriebenen Miniaturventilatoren (29), die zum Einblasen von Luft in die Ventilationsschicht (23) in an der vom Polsterbezug (25) abgekehrten Polsterseite mündenden, bis zur Ventilationsschicht (23) reichenden Zuluftkanälen angeordnet sind.

2. Sitz nach Anspruch 1,
**dadurch gekennzeichnet,**
**daß** die Mündung der Zu- und Abluftkanäle (17,20,21,31) an der Unter- oder Rückseite des Polsters (13) so angeordnet sind, daß Zu- und Abluftstrom voneinander getrennt sind.

3. Sitz nach Anspruch 1 oder 2,
**dadurch gekennzeichnet,**
**daß** die Abluftkanäle (31) etwa mittig im Polster (13), vorzugsweise im Bereich einer Polsterabheftung (28), angeordnet sind.

4. Sitz nach einem der Ansprüche 1 - 3,
**dadurch gekennzeichnet,**
**daß** zwischen der Unterseite des Polsters (13) und einer Sitzschale (16) des Sitzteils (11) ein über die gesamte Polsterfläche sich erstreckender Hohlraum (14) vorhanden ist und in der Unterseite der Sitzschale (16) mindestens eine Lufteintrittsöffnung (17) ausgebildet ist und daß die Abluftkanäle (31) sich jeweils in einem den Hohlraum (14) durchdringenden, außerhalb des Hohlraums (14) auf der Unterseite der Sitzschale (16) mündenden Luftschacht (32), vorzugsweise einstückig, fortsetzen.

5. Sitz nach Anspruch 4,
**dadurch gekennzeichnet,**
**daß** die Lufteintrittsöffnung (17) im Bereich eines in der Sitzschale (16) ausgebildeten Anitsubmarining-Keils (161) angeordnet und die Mündungen der Luftschächte (32) in einem den Fahrzeugboden näherliegenden Abschnitt der Sitzschale (16) angeordnet ist.

6. Sitz nach einem der Ansprüche 1 - 5,
**dadurch gekennzeichnet,**
**daß** zwischen der Rückseite des Polsters (13) und einer auf der Rückseite der Rückenlehne (12) verlaufenden Lehnenverkleidung (18) ein sich über die gesamte Polsterfläche erstreckender Hohlraum (19) ausgebildet ist, daß in der Lehnenverkleidung (18) im unteren Rückenbereich der Rückenlehne (12) und/oder an deren Unterseite mindestens eine Lufteintrittsöffnung (20, 21) ausgebildet ist und daß die Abluftkanäle (31) sich jeweils in einem den Hohlraum (19) durchdringenden, außerhalb des Hohlraums (19) auf der Rückseite der Lehnenverkleidung (18) mündenden Luftschacht (32) fortsetzen.

7. Sitz nach Anspruch 6,
**dadurch gekennzeichnet,**
**daß** die Mündungen der Luftschächte (32) in der Lehnenverkleidung (18) oberhalb der Rückenlehnenmitte angeordnet sind.

8. Sitz nach einem der Ansprüche 4 - 7,
**dadurch gekennzeichnet,**
**daß** die Luftschächte (32) in Achsrichtung nachgiebig, z.B. als Faltenbälge, ausgebildet sind.

9. Sitz nach einem der Ansprüche 1 - 8,
**dadurch gekennzeichnet,**
**daß** im Polster (13) des Sitzteils (11) die Zuluftkanäle (30) im vorderen und hinteren Bereich des Polsters (13) angeordnet sind.

10. Sitz nach einem der Ansprüche 1 - 9,
**dadurch gekennzeichnet,**
**daß** im Polster (13) der Rückenlehne (12) die Zuluftkanäle (30) im oberen und unteren Bereich des Polsters (13) angeordnet sind.

## Claims

1. Vehicle seat with a cushion (13) integrated in a seat part (11) and/or a back rest (12), which has an air-permeable ventilation layer (23) made in particular from a coarse-meshed spacing knitted material, and a cushion cover (25) spanning the cushion surface facing the seat occupant, air outlet ducts (31) being incorporated in the cushion (13) which extend from the ventilation layer (23) as far as the bottom or rear face of the cushion (13) where they freely open,
**characterised by**
a plurality of electrically driven miniature fans (29) disposed in air inlet ducts opening at the cushion side remote from the cushion cover (25) and extending as far as the ventilation layer (23) as a means of blowing air into the ventilation layer (23).

2. Seat as claimed in claim 1,
**characterised in that**
the opening of the air inlet and outlet ducts (17, 20, 21, 31) on the bottom or rear face of the cushion (13) are disposed so that air inlet and outlet ducts are separated from one another.

3. Seat as claimed in claim 1 or 2,
**characterised in that**
the air outlet ducts (31) are disposed more or less at the centre of the cushion (13), preferably in the region of a cushion tacking (28).

4. Seat as claimed in one of claims 1 - 3,
**characterised in that**
a cavity (14) is provided between the bottom face of the cushion (13) and a seat shell (16) of the seat part (11) extending across the entire cushion surface, and at least one air inlet orifice (17) is provided in the bottom face of the seat shell (16), and the air outlet ducts (31) are respectively extended, preferably in a single piece, by an air shaft (32) penetrating the cavity (14) and opening outside the cavity (14) on the bottom face of the seat shell (16).

5. Seat as claimed in claim 4,
**characterised in that**
the air inlet orifice (17) is disposed in the region of an anti-submarining wedge (161) provided in the seat shell (16) and the openings of the air shafts (32) are disposed in a portion of the seat shell (16) lying closer to the vehicle floor.

6. Seat as claimed in one of claims 1 - 5,
**characterised in that**
disposed between the rear face of the cushion (13) and a back rest panel (18) extending on the rear face of the back rest (12) is a cavity (19) extending across the entire cushion surface, and at least one air inlet orifice (20, 21) is provided in the back rest panel (18) in the bottom back region of the back rest (12) and/or on its bottom face, and the air outlet ducts (31) are respectively extended by an air shaft (32) extending through the cavity (19) and opening outside of the cavity (19) on the rear face of the back rest panel (18).

7. Seat as claimed in claim 6,
**characterised in that**
the openings of the air shafts (32) in the back rest panel (18) are disposed above the back rest middle.

8. Seat as claimed in one of claims 4 - 7,
**characterised in that**
the air shafts (32) are of a flexible design in the axial direction, e.g. in the form of bellows.

9. Seat as claimed in one of claims 1 - 8,
**characterised in that**
the air inlet ducts (30) in the cushion (13) of the seat part (11) are disposed in the front and rear region of the cushion (13).

10. Seat as claimed in one of claims 1 - 9,
**characterised in that**
the air inlet ducts (30) in the cushion (13) of the back rest (12) are disposed in the top and bottom region of the cushion (13).

## Revendications

1. Siège de véhicule comprenant un rembourrage (13) intégré dans une partie (11) formant l'assise et/ou un dossier (12), lequel rembourrage présente une couche de ventilation (23) pouvant être traversée par de l'air, se composant en particulier d'un tissu d'espacement à grandes mailles, et une garniture de rembourrage (25) recouvrant la surface du rembourrage tournée vers la personne assise, où des conduits d'air sortant (31) sont ménagés dans le rembourrage (13), conduits d'air sortant qui s'étendent depuis la couche de ventilation (23) jusqu'à la partie formant le dessous ou l'envers du rembourrage (13) et y débouchent librement,
**caractérisé par** une pluralité de ventilateurs miniatures (29) commandés électriquement qui, pour insuffler de l'air dans la couche de ventilation (23), sont disposés dans des conduits d'air entrant débouchant sur le côté du rembourrage placé à l'opposé de la garniture (25) du rembourrage et allant jusqu'à la couche de ventilation (23).

2. Siège selon la revendication 1, **caractérisé en ce que** l'orifice des conduits d'air entrant et d'air sortant (17, 20, 21, 31), sur la partie formant le dessous ou l'envers du rembourrage (13), est disposé de manière telle que le flux d'air entrant et le flux d'air sortant soient séparés l'un de l'autre.

3. Siège selon la revendication 1 ou 2, **caractérisé en ce que** les conduits d'air sortant (31) sont disposés à peu près au milieu du rembourrage (13), de préférence dans la zone d'une couture (28) du rembourrage.

4. Siège selon l'une quelconque des revendications 1 à 3, **caractérisé en ce qu'**il existe, entre le dessous du rembourrage (13) et une coque de siège (16) de la partie (11) formant l'assise, un espace creux (14) s'étendant sur toute la surface du rembourrage, et au moins une ouverture d'entrée d'air (17) configurée dans la partie formant le dessous de la coque (16) du siège, et **en ce que** les conduits d'air sortant (31) se continuent respectivement, de préférence en formant une seule et même pièce, dans un puits de sortie d'air (32) traversant l'espace creux (14) et débouchant à l'extérieur de l'espace creux (14), sur le dessous de la coque (16) du siège.

5. Siège selon la revendication 4, **caractérisé en ce que** l'ouverture d'entrée d'air (17) est disposée dans la zone d'une pièce d'anti-plongée (161) en forme de coin configurée dans la coque (16) du siège, et les orifices des puits de sortie d'air (32) sont disposés dans une partie de la coque (16) du siège placée plus près du plancher du véhicule.

6. Siège selon l'une quelconque des revendications 1 à 5, **caractérisé en ce qu'**un espace creux (19) s'étendant sur toute la surface du rembourrage est configuré entre l'envers du rembourrage (13) et un revêtement de dossier (18) s'étendant sur la face arrière du dossier de siège (12), **en ce que** au moins une ouverture d'entrée d'air (20, 21) est configurée dans le revêtement (18) du dossier, dans la zone arrière inférieure du dossier de siège (12) et/ou sur son dessous, et **en ce que** les conduits d'air sortant (31) se continuent respectivement dans un puits de sortie d'air (32) traversant l'espace creux (19) et débouchant à l'extérieur de l'espace creux (19), sur la face arrière du revêtement (18) du dossier.

7. Siège selon la revendication 6, **caractérisé en ce que** les orifices des puits de sortie d'air (32) sont disposés dans le revêtement (18) du dossier, au-dessus du milieu du dossier de siège.

8. Siège selon l'une quelconque des revendications 4 à 7, **caractérisé en ce que** les puits de sortie d'air (32) sont configurés par exemple comme des soufflets, souples dans la direction axiale.

9. Siège selon l'une quelconque des revendications 1 à 8, **caractérisé en ce que**, dans le rembourrage (13) de la partie (11) formant l'assise, les conduits d'air entrant (30) sont disposés dans la zone avant et arrière du rembourrage (13).

10. Siège selon l'une quelconque des revendications 1 à 9, **caractérisé en ce que**, dans le rembourrage (13) du dossier de siège (12), les conduits d'air entrant (30) sont disposés dans la zone supérieure et inférieure du rembourrage (13).
